# EUROPÄISCHE PATENTSCHRIFT

(11) **EP 3 332 142 B1**
(45) Veröffentlichungstag und Bekanntmachung des Hinweises auf die Patenterteilung: **28.11.2018**
(21) Anmeldenummer: 16741965.4
(22) Anmeldetag: 26.07.2016
(51) Int. Cl.: F16D 51/20, F16D 65/08, F16D 65/09, F16D 65/22

(54) **BREMSBACKE**
BRAKE SHOE
MÂCHOIRE DE FREIN

(30) Priorität: 03.08.2015 DE 102015112712
(43) Veröffentlichungstag der Anmeldung: 13.06.2018
(73) Patentinhaber: SAF-HOLLAND GmbH, 63856 Bessenbach (DE); Paul Brüser GmbH, 57413 Finnentrop (DE)
(72) Erfinder: STEGMANN, Rainer, 63768 Hösbach (DE); BRÜSER, Bernd, 57413 Finnentrop-Heggen (DE); BRÜSER, Josef, 57413 Finnentrop-Heggen (DE); FLECKENSTEIN, Stefan, 63856 Bessenbach (DE); KHOURY, Jean, 63303 Dreieich (DE)
(74) Vertreter: Müller Schupfner & Partner Patent- und Rechtsanwaltspartnerschaft mbB
(86) Internationale Anmeldenummer: PCT/EP2016/067778
(87) Internationale Veröffentlichungsnummer: WO 2017/021214

(56) Entgegenhaltungen:
- EP-A1- 0 482 567
- DE-A1- 2 748 335
- DE-A1-102013 112 812
- DE-U1- 9 014 704
- DE-U1- 29 704 700

## Beschreibung

Die vorliegende Erfindung betrifft ein Backenelement, insbesondere zum Einsatz in einer Trommelbremse.

Backenelemente, insbesondere Bremsbacken für Trommelbremsen sind aus dem Stand der Technik bekannt. Insbesondere sind dabei die Backenelemente in herkömmlicher Weise im Wesentlichen bogenförmig ausgebildet und an einem ersten ihrer beiden Enden schwenkbar relativ zum Bremsträger in einer Lagerpfanne gelagert. An dem zweiten distalen Ende greift eine Betätigungseinheit an den Bremsbacken an, welche bevorzugt zwei gegenüberliegende Bremsbacken voneinander beabstandet, oder spreizt, und diese somit gegen die Innenseite einer Bremstrommel presst. Für die schwenkbare Lagerung der Bremsbacken an einem Bremsträger wurde bisher in den meisten Fällen eine Anordnung aus zwei Lagerpfannen mit einer dazwischen angeordneten Kugel verwendet. Dabei ist eine erste Lagerpfanne an dem Bremsträger angeordnet und eine zweite Lagerpfanne an dem Backenelement. Mittels der zwischen den Lagerpfannen angeordneten Kugel war es möglich, dass die Bremsbacke mehrdimensionale Schwenkbewegungen ausführt, um so stets die richtige Lage für eine vollflächige Anpressung an der Bremstrommelinnenseite erreichen zu können. Bei den aus dem Stand der Technik bekannten Lagerungen der Bremsbacken ergeben sich jedoch Nachteile hinsichtlich der vielen Bauteile, die zur schwenkbaren Lagerung nötig sind, sowie hinsichtlich des Gewichts der Anordnung von zwei Lagerpfannen und einer Kugel und außerdem auch hinsichtlich des Fertigungsaufwandes bzw. des Montageaufwandes, der benötigt wird, um die Bremsanlage zusammenzusetzen.

Die EP 0 482 567 betrifft eine Bremsbackenlagerung für Fahrzeugtrommelbremsen, bei welcher ein Bremsbelagträger um eine im Wesentlichen zur Bremstrommelachse parallele Achse schwenkbar an einem Bremsträger angelenkt ist.

Die DE 90 14 704 U1 und DE 10 2013 112 812 A1 betreffen Bremsbackenlagerungen von Trommelbremsen, bei welchen die Bremsbacke über Lagerelemente an einem Bremsträger gelagert sind.

Die DE 27 48 335 A1 betrifft eine Klotzbremse für Fördereinrichtungen und die DE 297 04 700 U1 betrifft ein aus Aluminium im Druckgussverfahren hergestelltes Bremsbackenlager.

Aufgabe der vorliegenden Erfindung ist es, eine verbesserte schwenkbare Lagerung für ein Backenelement bereitzustellen, welche leichtgewichtig und besonders einfach herzustellen ist und den Montageaufwand der Bremsbacke verringert.

Diese Aufgaben werden gelöst mit einem Backenelement gemäß Anspruch 1 sowie einem Verfahren zur Herstellung eines Backenelements gemäß Anspruch 12.

Erfindungsgemäß umfasst das Backenelement einen Stegabschnitt und einen Lagerabschnitt, wobei der Lagerabschnitt einen balligen Abschnitt aufweist, wobei der Stegabschnitt einen stegseitigen Eingriffsabschnitt zum formschlüssigen Eingriff mit einem Backensteg aufweist, oder einstückig mit einem Backensteg ausgeführt ist, wobei der Stegabschnitt und der Lagerabschnitt einstückig miteinander ausgebildet sind. Der ballige Abschnitt des Backenelements ist insbesondere dafür ausgelegt, an einer entsprechenden Lagergeometrie, beispielsweise einer Lagerpfanne eines Bremsträgers einer Trommelbremse, schwenkbar gelagert zu werden. Mit anderen Worten ist der ballige Abschnitt des Lagerabschnitts zum Eingriff mit der Lagerpfanne einer Trommelbremse bzw. des Bremsträgers einer Trommelbremse ausgelegt. Der stegseitige Eingriffsabschnitt ist erfindungsgemäß entweder dafür ausgelegt, mit einem Backensteg in formschlüssigen Eingriff gebracht zu werden oder er ist einstückig mit dem Backensteg ausgeführt. Der Stegabschnitt und der Lagerabschnitt sind einstückig miteinander ausgebildet, wobei der Stegabschnitt und der Lagerabschnitt vorzugsweise an einem gemeinsamen Blechteil ausgebildet sind, welches besonders bevorzugt durch Umformen in die entsprechende Form gebracht wird. Bevorzugt ist der Stegabschnitt ein abgekanteter Bereich eines Blechteils, welches auch den Lagerabschnitt aufweist. Als abgekanteter Bereich wird insbesondere ein Abschnitt eines Blechteils verstanden, welcher mit einem Winkel von 75° - 105° von dem restlichen Bereich des Blechteils absteht. Der Vorteil der Abkantung des Stegabschnitts ist zum einen, dass in dem dabei umgeformten Bereich eine Materialverfestigung eintritt und zum anderen, dass durch die sich annähernd rechtwinklig zueinander erstreckenden Blechbereiche eine Versteifung gegen Verwindungen eintritt. Der Backensteg ist vorzugweise das blechartig ausgebildete Stützteil einer Bremsbacke einer Trommelbremse. Insbesondere bevorzugt weist der Backensteg dabei eine bogenförmige Erstreckung auf, wobei seine Erstreckung zu der bogenförmigen Erstreckung, also insbesondere bevorzugt in axialer Richtung der bogenförmigen Erstreckung wesentlich geringer ist als in den anderen Raumrichtungen. Mit anderen Worten ist der Backensteg kreisringsegmentförmig ausgebildet. In einer ersten erfindungsgemäß vorgesehenen Ausführungsform ist der Stegabschnitt, welcher einstückig mit dem Lagerabschnitt ausgebildet ist, auch einstückig mit dem Backensteg ausgeführt. Dies hat den Vorteil, dass mit ein- und demselben Umformverfahren das gesamte Backenelement hergestellt werden kann, wodurch anschließende Montagearbeiten entfallen. In einer zweiten, erfindungsgemäß vorgesehenen Ausführungsform weist der Stegabschnitt Eingriffsmittel auf, welche zu einem formschlüssigen Eingriff mit einem dazu korrespondierenden Eingriffsabschnitt an einem Backensteg bestimmt sind. Bei dieser bevorzugten Ausführungsform ist das Backenelement dafür ausgelegt, gemeinsam mit einem oder einer Vielzahl von Backenstegen eine Bremsbacke für ein Nutzfahrzeug zu bilden. Der Vorteil dieser Ausführungsform ist, dass ein- und dasselbe Backenelement in einer Vielzahl verschiedener Bremsbacken Verwendung finden kann. So können insbesondere die Fertigungskosten zur Herstellung des Backenelements reduziert werden, indem Massenproduktion ein- und desselben Backenelements für eine Vielzahl verschiedener Bremsbacken für Trommelbremsen Verwendung finden kann. Als balliger Abschnitt im Sinne der vorliegenden Erfindung ist insbesondere bevorzugt ein zumindest ausschnittsweise konvex gekrümmter Abschnitt des Lagerabschnitts vorgesehen. Dabei kann der ballige Abschnitt beispielsweise Teil einer Kugelschale sein oder beispielsweise Teil einer hyperbolisch gekrümmten Oberfläche. Die kugelförmige Ausbildung des balligen Abschnitts hat den Vorteil, dass der Lagerabschnitt zum Eingriff mit Lagerpfannen eines Bremsträgers Verwendung finden kann, welcher zuvor für den Eingriff mit kugelförmigen Kraftübertragungselementen bestimmt war. Bei einer elliptischen bzw. hyperbolisch gekrümmten Oberfläche können verschiedene Rundungsradien in verschiedenen Richtungen am balligen Abschnitt vorgesehen sein, welche insbesondere eine besonders gute Anpassung an die am Bremsbackenelement wirkenden Kräfte bei Schwenkbewegung erlauben. So kann beispielsweise der kleinere Radius der Krümmung des balligen Abschnitts in der Hauptschwenkebene der Bremsbacke d.h. der Ebene in welcher die Bremsbacke bei Betätigung verschwenkt wird, angeordnet sein. So kann bei Verschwenkung in dieser Richtung die Normale der von der Bremsbacke auf den Bremsträger übertragenen Kraft immer mittig an der Erstreckung des balligen Abschnitts sowie der korrespondierenden Geometrie der Lagerpfanne am Bremsträger verlaufen. Gleichzeitig kann der Radius quer zur Schwenkrichtung der Trommelbremse bei Betätigung der Bremsbacke größer gewählt werden, um eine größere Abstützfläche bzw. einen größeren Widerstand gegen Verschwenkung quer zur Verschwenkung bei Betätigung der Bremsbacke der Trommelbremse, entgegenzusetzen, insbesondere um Vibrationen zu dämpfen.

Vorzugsweise weist die konvexe Seite des balligen Abschnitts in eine Lagerrichtung, wobei sich der Stegabschnitt entgegengesetzt zur Lagerrichtung erstreckt. Die konvex gekrümmte Seite des balligen Abschnitts ist somit die Seite, mit der sich der Lagerabschnitt bzw. der ballige Abschnitt des Lagerabschnitts an der Lagerpfanne des Bremsträgers abstützt. Dabei erstreckt sich der einstückig am Lagerabschnitt vorgesehene Stegabschnitt vorzugsweise entgegengesetzt und besonders bevorzugt entgegengesetzt und parallel zur Lagerrichtung. Der Vorteil dieser Ausbildung ist, dass der ballige Abschnitt relativ zur Lagerpfanne des Bremsträgers in allen Richtungen mit einer Winkelverschwenkung relativ zur Lagerrichtung verschwenkt werden kann. Auf diese Weise ist eine möglichst freie Verschwenkbewegung des Backenelements relativ zum Bremsträger möglich, wodurch die Bremsbacke sowohl ihre betriebs- bzw. betätigungsbedingten Verschwenkbewegungen durchführen kann, als auch eine Verformung und Schwingungen der Bremstrommel ausgleichen kann. Es ist auf diese Weise gewährleistet, dass die Bremsbeläge der Bremsbacke stets vollflächig an der Innenseite der Bremstrommel anliegen, ohne dass es dabei zu einer Verspannung des Backenelements kommt.

Besonders bevorzugt sind der Lagerabschnitt und der Stegabschnitt gemeinsam als Blechteil ausgeführt. Als Blechteil wird im vorliegenden Zusammenhang ein Bauteil verstanden, dessen Wandstärke im Vergleich zur Erstreckung der restlichen Raumrichtungen des Bauteils besonders gering ist. Besonders bevorzugt ist das Blechteil dabei aus Metall gefertigt. Der Vorteil eines Blechteils ist, dass es besonders einfach in Massenfertigung herstellbar ist, beispielsweise durch Ausstanzen aus einem größeren gewalzten Blech und besonders gut dafür geeignet ist mittels Umformverfahren wie beispielsweise Schmieden oder Tiefziehen oder Abkanten in die Form eines Backenelements gebracht zu werden. Ferner ist mit Vorteil die Wandstärke des Blechteils, welches einen Lagerabschnitt und einen Stegabschnitt umfasst, im Wesentlichen konstant. Dies bedeutet im Rahmen der vorliegenden Erfindung, dass die Wandstärke des Blechteils in einigen räumlich begrenzten Abschnitten nur ein 0,85-faches der mittleren Wandstärke des Blechteils sein kann. Diese Bereiche mit nur dem 0,85-fachen der mittleren Wandstärke finden sich beispielsweise in den Kantenbereichen zwischen Lagerabschnitt und Stegabschnitt, wo höhere Umformgrade vorliegen. Besonders bevorzugt kann die Abweichung vom Mittelwert der Wandstärke in einem Bereich von 0,05- bis 0,1-fachen der mittleren Wandstärke gehalten werden, wodurch die Festigkeitswerte des Blechteils möglichst wenig lokal geschwächt werden.

Entsprechend sind der Lagerabschnitt und der Stegabschnitt besonders bevorzugt mittels Umformen bzw. als Umformteil hergestellt. Das Umformen beeinflusst dabei die Materialeigenschaften des Backenelements in besonders bevorzugter Weise. So ist ein durch Umformen hergestelltes Backenelement besonders stabil und es weist besonders günstige Material, bzw. Gefügeeigenschaften auf. Es hat sich gezeigt, dass ein Stegelement, welches durch Umformen hergestellt ist, besonders in den Kantenbereichen ein besonders festes Gefüge aufweist, welches sowohl eine hohe Zugfestigkeit als auch eine verbesserte Zähigkeit aufweist. Das Materialgefügte wird beim Umformen insbesondere dadurch verfestigt, dass die Versetzungsdichte erhöht wird. Dies ist insbesondere für den Lagerabschnitt vorteilhaft, da dort mehr-dimensionale Spannungszustände besser ausgehalten werden können als bei einem Material, welches nicht vorher umgeformt wurde.

In einer weiteren bevorzugten Ausführungsform weist der Backensteg seine größte Erstreckung längs einer Stegebene auf, wobei der Backensteg vorzugsweise mit dem Stegabschnitt formschlüssig und stoffschlüssig in Eingriff bringbar ist. Besonders bevorzugt wirkt dabei der Formschluss zwischen dem Backensteg und dem Stegabschnitt längs einer in der Stegebene liegenden Richtung. Auf diese Weise kann besonders bevorzugt gewährleistet werden, dass Kräfte, welche über den Stegabschnitt vom Backensteg auf den Lagerabschnitt übertragen werden, vollständig über den Formschluss zwischen dem Backensteg und dem Stegabschnitt übertragen werden. Zur Unterstützung eines formschlüssigen Eingriffs zwischen dem Backensteg und dem Stegabschnitt ist vorzugsweise zusätzlich ein Stoffschluss zwischen diesen beiden Bauteilen vorgesehen. Der Stoffschluss kann dabei vorzugsweise durch Löten oder Kleben hergestellt sein, um insbesondere bevorzugt möglichst wenig Temperaturverzug am Backensteg zu verursachen. Auf diese Weise kann die Formtreue des gesamten Backenelements verbessert werden.

Ferner bevorzugt ist der stegseitige Eingriffsabschnitt dazu ausgelegt, eine längs der Stegebene wirkende Hinterschneidung mit einem backenseitigen Eingriffsabschnitt des Backensteges zu bilden. Der stegseitige Eingriffsabschnitt ist dabei vorzugsweise als Vorsprung ausgebildet, welcher mit einem entsprechend korrespondierenden Rücksprung am Backensteg in Eingriff bringbar ist. Besonders bevorzugt ist dabei eine Kombination mehrerer stegseitiger Eingriffsabschnitte und mehrerer backenseitiger Eingriffsabschnitte vorgesehen von denen ausgewählte aus Vorsprung ausgebildet sind, welche mit jeweiligen korrespondierenden und gegenüberliegenden Rücksprüngen in Eingriff bringbar sind. Auf diese Weise kann beispielsweise durch eine leichte Verdrehbewegung des Stegabschnitts relativ zum Backensteg, ähnlich einem Bajonettverschluss, das Backenelement mit dem Backensteg in formschlüssigen Eingriff gebracht werden. Dabei kann es bevorzugt sein, dass das Backenelement über einen Kleber oder eine Lötverbindung in der Position gehalten wird, in der der Formschluss zumindest in der Kraftübertragungsrichtung vom Backensteg auf den Stegabschnitt und den Lagerabschnitt dazu ausgebildet ist, sämtliche Kräfte aufzunehmen und ein Verrutschen des stegseitigen Eingriffsabschnitts relativ zum backenseitigen Eingriffsabschnitt zu verhindern.

Vorzugsweise ist der Stegabschnitt, zumindest in seinen unmittelbar an den Lagerabschnitt grenzenden Bereichen eben und krümmungsfrei ausgebildet. Im Gegensatz zum balligen Abschnitt, der konvex gekrümmt ist, ist es bevorzugt, dass der Lagerabschnitt und vorzugsweise ebenfalls der Stegabschnitt im Wesentlichen eben und krümmungsfrei ausgebildet sind. Dabei findet sich eine Krümmung zwischen dem Lagerabschnitt und dem Stegabschnitt in dem Bereich, in welchem der einstückig ausgeführte Blechkörper, welcher den Stegabschnitt und den Lagerabschnitt umfasst, abgewinkelt ist. Mit anderen Worten weist der Stegabschnitt vorzugsweise abgesehen von seiner Wandstärke keine signifikante Erstreckung quer zur Stegebene auf. Die im Wesentlichen ebene und krümmungsfreie Ausbildung des Stegabschnitts eignet sich insbesondere zur Übertragung von Zug- und Druckkräften zwischen dem Lagerabschnitt und dem Backensteg. Insbesondere kann dabei Ausbeulen bzw. ein Knicken des Stegabschnitts vermieden werden, da Druckkräfte auf den Stegabschnitt keine quer- oder senkrecht zur Stegebene wirkenden Kraftkomponenten erzeugen.

Weiterhin bevorzugt weist der Lagerabschnitt einen ebenen Abschnitt auf, wobei der ballige Abschnitt unmittelbar an den ebenen Abschnitt grenzt und von diesem zumindest bereichsweise umgeben ist. Insbesondere bevorzugt ist der ebene Abschnitt des Lagerabschnitts derart angeordnet, dass er den balligen Abschnitt im Wesentlichen vollständig umgibt. Mit anderen Worten ist der ebene Abschnitt des Lagerabschnitts zumindest zwischen dem balligen Abschnitt und dem Stegabschnitt angeordnet. Weiterhin bevorzugt ist zwischen dem ebenen Abschnitt und dem Stegabschnitt ein Bereich vorgesehen, in welchem der den Lagerabschnitt und den Stegabschnitt bildende Blechkörper abgewinkelt oder abgeknickt ist. Es versteht sich, dass in diesem Bereich das Backenelement eine Rundung aufweist, wobei vorzugsweise eines der Enden der Rundung im Wesentlichen tangential zur Stegebene verläuft und das zweite Ende der Rundung im Wesentlichen senkrecht zur Stegebene verläuft. In dem am Lagerabschnitt ein ebener Abschnitt vorgesehen ist, erleichtert sich die Fertigung bzw. die Ausbildung des balligen Abschnitts, da der Lagerabschnitt während des Umformvorganges am ebenen Abschnitt gehalten werden kann, um anschließend beispielsweise mittels Gesenkschmieden oder Tiefziehen oder einem ansonsten geeigneten Umformverfahren den balligen Abschnitt auszubilden.

Besonders bevorzugt grenzen der ebene Abschnitt und der Stegabschnitt in einem Biegeabschnitt aneinander, wobei der Biegeabschnitt eine Krümmung von circa 90° aufweist. Der Biegeabschnitt ist vorzugsweise der Bereich des Backenelements, in welchem das Backenelement abgewinkelt wird, um an einem ersten Ende der Abwinkelung den Lagerabschnitt auszubilden und an dem zweiten Ende der Abwinkelung den Stegabschnitt auszubilden. Besonders bevorzugt steht der ebene Abschnitt des Lagerabschnitt im Wesentlichen senkrecht zum Stegabschnitt. Somit spannt der Biegeabschnitt vorzugsweise einen Bogenabschnitt von circa 90° auf. Aufgrund der im Rahmen der vorliegenden Erfindung üblichen Toleranzen ergibt sich für den Biegeabschnitt vorzugsweise ein Kreisausschnitt von vorzugsweise 86° bis 104°, welcher durch den Biegeabschnitt aufgespannt wird.

Weiterhin bevorzugt ist der Krümmungsradius des Biegeabschnitts ein 0,05 bis 0,3-faches des Krümmungsradius' des balligen Abschnitts. Es hat sich gezeigt, dass insbesondere in diesem Bereich eine einerseits ausreichend hohe Umformung bzw. ein ausreichend hoher Umformgrad zur Erzeugung der bevorzugten Kaltverfestigung im Gefüge des Materials des Backenelements erreichbar ist. Andererseits wird durch Einhalten der Untergrenze dieses Radius das Aufreißen der äußeren Seite der Oberfläche der Krümmung verhindert. Insbesondere bevorzugt ist das Material des Backenelements an die Anforderungen an den balligen Abschnitt ausgelegt. Daher ist es vorteilhaft, den Krümmungsradius des Biegeabschnitts an den Krümmungsradius des balligen Abschnitts anzupassen. Besonders bevorzugt ist der ballige Abschnitt rotationssymmetrisch um die Lagerrichtung ausgebildet. Die Lagerrichtung ist vorzugsweise eine Rotationssymmetrieachse des balligen Abschnitts. Mit anderen Worten ist in dieser Ausführungsform der ballige Abschnitt vorzugsweise als Teil einer Kugelschale ausgebildet. Der ballige Abschnitt ist vorzugsweise in einer Lagerrichtung konvex gekrümmt, wobei die Lagerrichtung vorzugsweise parallel zur Stegebene erstreckt. Die Lagerrichtung ist vorzugsweise die Richtung entlang der sich der Lagerabschnitt, in seinem dafür ausgebildeten balligen Abschnitt, an der Lagerpfanne an einem Bremsträger abstützen kann.

Besonders bevorzugt ist die Lagerrichtung dabei die Richtung entlang derer im Wesentlichen die Kraft von der Lagerpfanne des Bremsbackenträgers im Lagerabschnitt übertragen wird. Es versteht sich, dass aufgrund der Schwenkbewegungen der Bremsbacke relativ zum Bremsträger sich die Richtung dieser Kraft stets ändert. Daher ist die Lagerrichtung vorzugsweise derart ausgerichtet ist, dass anteilig über die gesamten Betriebszustände der Bremsbacken gesehen, der größte Anteil der Bremskraft bzw. Stützkraft des Tragelements im Wesentlichen längs oder parallel zur Lagerrichtung übertragen wird.

Weiterhin erfindungsgemäß ist ein Verfahren zur Herstellung einer Bremsbacke vorgesehen, welches die Schritte: a) Bereitstellen eines Stanzteils mit einem Lagerabschnitt; b) Umformen des Lagerabschnitts derart, dass ein balliger Abschnitt gebildet ist; c) Umformen des Stanzteils und Erzeugen eines ersten Stegabschnitts, benachbart zum Lagerabschnitt, wobei der erste Stegabschnitt sich im Wesentlichen quer zum Lagerabschnitt erstreckt; umfasst. Das erfindungsgemäße Verfahren zeichnet sich dadurch aus, dass auf besonders einfache und zeitsparende Weise, mit im Wesentlichen nur zwei Arbeitsgängen, eine Bremsbacke hergestellt werden kann. Dabei wird in einem ersten Arbeitsgang ein Lagerabschnitt aus einem Stanzteil lediglich durch eindimensionales Umformen erzeugt. In einem zweiten Arbeitsgang wird das Stanzteil derart umgeformt, dass neben den Lagerabschnitt auch ein Stegabschnitt erzeugt wird. Es kann auf diese Weise ohne weitere Montagearbeiten die gesamte Bremsbacke oder vorzugsweise zumindest ein wesentlicher Teil der Bremsbacke allein durch Umformen ausgebildet werden. Das Umformen eignet sich insbesondere für die Massenfertigung von als Blechteil ausgebildeten Bremsbacken, wobei durch Hintereinanderschaltung der jeweiligen Maschinen für die Durchführung der zwei Arbeitsgänge "Ausformen des Lagerabschnitts" und "Ausformen des Stegabschnitts" in kürzester Zeit eine Vielzahl von Bremsbacken lediglich mit zwei Arbeitsgängen hergestellt werden kann. Auf diese Weise können insbesondere die Fertigungskosten und auch die Fertigungszeit zur Herstellung von Bremsbacken deutlich reduziert werden. Darüber hinaus ist eine weitere Montage von kugelförmigen Kraftübertragungselementen oder ähnlichen Zusatzbauteilen an der Bremsbacke nicht erforderlich. Somit ermöglicht das Verfahren zur Herstellung einer Bremsbacke im Sinne der vorliegenden Erfindung eine besonders kostengünstige und besonders einfache Herstellung von Bremsbacken, welche anstelle eines kugelförmigen Kraftübertragungselements vorzugsweise einen balligen Abschnitt aufweisen.

Insbesondere bevorzugt kommt zum Umformen des Lagerabschnitts Gesenkschmieden oder Tiefziehen zum Einsatz. Der Vorteil dieser Fertigungsverfahren ist, dass entsprechend der Hauptumformrichtung während des Umformens eine Gefügeveränderung erfolgt. Dieser Vorgang wird auch als Kaltverfestigung bezeichnet, wobei durch die Gefügeänderung während des Umformens die Materialfestigkeit und die Widerstandsfähigkeit gegen Sprödbruch deutlich erhöht werden können. Insbesondere während des Schmiedens erhält der Werkstoff einen günstigen Faserverlauf. Der Vorteil sowohl des Tiefziehens als auch des Gesenkschmiedens ist, dass die Rissempfindlichkeit gesenkt und die Bauteilsicherheit somit deutlich erhöht werden kann. Als Vorteil des Tiefziehens sind die günstigeren Herstellungskosten sowohl für das Werkzeug als auch für die Durchführung und die geringeren an der Maschine erforderlichen Kräfte zu nennen. In diesem Zusammenhang ist es als nachteilig für das Gesenkschmieden anzusehen, dass eine Mindestzahl von gleichartigen Schmiedestücken hergestellt werden muss, um die Kosten für ein Gesenk bzw. die entsprechende Matrize zu decken. Als Vorteil des Gesenkschmiedens ist zu nennen, dass die Gefügeveränderung besonders positiv beeinflusst werden kann, da insgesamt ein geringerer Umformgrad als beim Tiefziehen benötigt wird.

Besonders bevorzugt kommt zum Umformen des Stanzteils für die Ausbildung des ersten Stegabschnitts ein Tiefziehverfahren zum Einsatz. Tiefziehen eignet sich insbesondere, um die im Wesentlichen senkrecht zueinander stehenden Bereiche des Lagerabschnitts und des Stegabschnitts auszubilden. Kombiniert mit dem Tiefziehen könnte ein Ausbeulverfahren, bei welchem eine im Wesentlichen halbkugelförmige Geometrie eines oberen Gesenkteils den Bereich des Lagerabschnitts, in welchem der ballige Abschnitt ausgebildet werden soll, in eine im Wesentlichen halbkugelförmige Mulde in einer Matrize der Tiefziehmaschine hineindrückt und gleichzeitig sowohl der obere Gesenkteil als auch der untere Gesenkteil relativ zu einer Außenwand der Tiefziehmaschine verlagert werden, um an dieser Außenwand den Stegabschnitt relativ zum Lagerabschnitt abzukanten.

In einer besonders bevorzugten Ausführungsform wird das Ausformen des Lagerabschnitts und das Abwinkeln des Stegabschnitts in einem Arbeitsgang durchgeführt. Auf diese Weise lassen sich beim erfindungsgemäßen Herstellungsverfahren für eine Bremsbacke besonders bevorzugt die Herstellungszeit und die Herstellungskosten nochmals deutlich reduzieren. Ein wesentlicher Vorteil ist, dass zur Herstellung der Bremsbacke nur eine Maschine, welche in einer besonders bevorzugten Ausführungsform auch nur eine eindimensionale Senkbewegung durchführt, erforderlich ist. Es versteht sich, dass sich durch die Durchführung der erfindungsgemäß und bevorzugt vorgesehenen Verfahrensschritte auch die gegenständlichen Eigenschaften des Backenelements verbessern, indem insbesondere durch die verschiedenen Umformvorgänge lokale Gefügeverfestigungen erzeugt werden können, welche die Rissempfindlichkeit der Bremsbacke senken und die Festigkeit und Formstabilität der Bremsbacke erhöhen. Insbesondere kann bei der vorliegenden Bremsbacke auf Schweißverfahren verzichtet werden und somit ein Verzug der Bremsbacke durch Thermospannungen verhindert werden.

Weitere Vorteile und Merkmale der vorliegenden Erfindung ergeben sich aus der nachfolgenden Beschreibung mit Bezug auf die beigefügen Figuren. Es versteht sich dabei, dass einzelne in nur einer gezeigten Ausführungsform offenbarte Merkmale auch für andere Ausführungsformen Verwendungen finden können, sofern dies nicht explizit ausgeschlossen wurde oder sich aufgrund technischer Gegebenheiten verbietet. Es zeigen:
- Fig.1: eine perspektivische Ansicht einer bevorzugten Ausführungsform des erfindungsgemäßen Backenelements,
- Fig. 2: eine Ansicht einer bevorzugten Ausführungsform des Stanzteils zur Durchführung des erfindungsgemäßen Verfahrens zur Herstellung einer Bremsbacke,
- Fig. 3: eine Schnittansicht einer bevorzugten Ausführungsform des erfindungsgemäßen Backenelements, und
- Fig. 4: eine perspektivische Ansicht einer bevorzugten Ausführungsform des erfindungsgemäßen Backenelements.

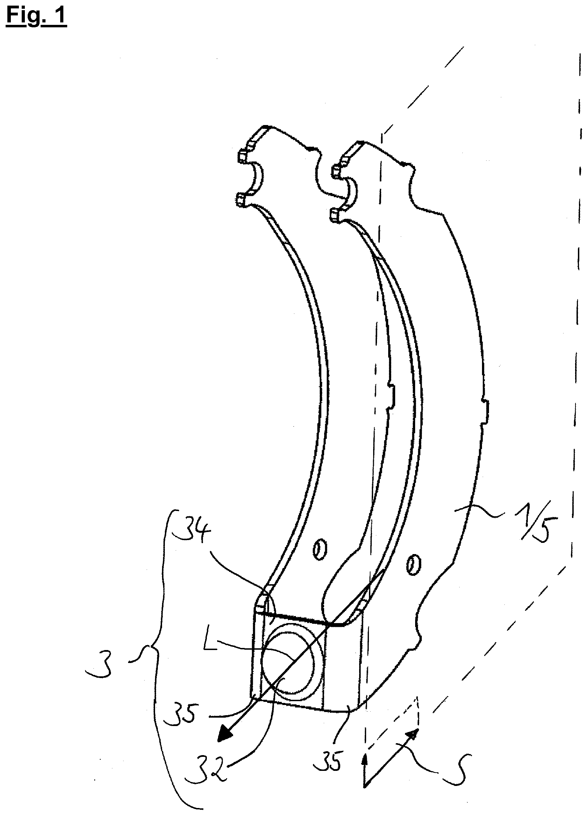

Das in Fig. 1 gezeigte Backenelement weist einen Stegabschnitt 1 auf, welcher in bevorzugter Weise einstückig mit einem Backensteg 5 ausgeführt ist. Insbesondere bevorzugt weist das Backenelement dabei zwei Stegabschnitte auf, welche voneinander beabstandet sind und auf zwei Seiten bzw. an zwei Enden des Lagerabschnitts 3 angeordnet sind. Der Lagerabschnitt 3 weist einen balligen Abschnitt 32 auf, welcher zur Abstützung des Backenelements am Bremsträger, insbesondere an der Lagerpfanne einen Bremsträgers eines Trommelbremssystems vorgesehen ist. Hierfür weist der ballige Abschnitt 32 vorzugsweise eine zumindest teilweise kugelförmige Oberfläche auf, welche besonders bevorzugt eine gehärtete Oberflächenstruktur besitzt, um mit möglichst geringem Widerstand an einem Bremsträger eingreifen zu können. Der ballige Abschnitt 32 des Lagerabschnitts 3 gewährleistet eine schwenkbare Lagerung des Backenelements an dem Bremsträger einer Trommelbremse. Der Stegabschnitt 1 und der einstückig mit diesem ausgeführte Backensteg 5 erstrecken sich vorzugsweise im Wesentlichen in oder parallel zu einer Stegebene S, wobei die beiden Stegabschnitte 1 und die entsprechenden Backenstege 5 jeweils quer zur Stegebene voneinander beabstandet sind. Besonders bevorzugt verlaufen die Backenstege 5 und/oder die Stegabschnitte 1 parallel zueinander und parallel zur Stegebene S. In der Figur nicht gezeigt ist, dass auf der konvex gekrümmten Seite der Backenstege 5 ein Belagblech festlegbar ist, welches ebenfalls gekrümmt ist, wobei sich das Belagblech im Wesentlichen quer zur Stegebene S erstreckt und zur Lagerung von Bremsbelägen auf der dem Backenelement bzw. den Stegabschnitten 1 und den Backenstegen 5 abgewandten Seite des Belagbleches festlegbar sind. Der ballige Abschnitt 32 ist vorzugsweise in einer Lagerrichtung L konvex gekrümmt, wobei die Lagerrichtung L vorzugsweise parallel zur Stegebene S erstreckt. Die Lagerrichtung L ist vorzugsweise die Richtung entlang der sich der Lagerabschnitt 3, in seinem dafür ausgebildeten balligen Abschnitt 32, an der Lagerpfanne an einem Bremsträger (nicht gezeigt) abstützen kann. Der Lagerabschnitt 3 umfasst vorzugsweise einen ebenen Abschnitt 34, welcher sich im Wesentlichen quer zur Stegebene S erstreckt und mit besonderem Vorteil den balligen Abschnitt 32 im Wesentlichen umgibt. Der ebene Abschnitt 34 vereinfacht die Herstellung des balligen Abschnitts 32, da in diesem Bereich insbesondere bevorzugt der Grundkörper zur Herstellung eines Backenelements fest eingespannt werden kann, um den balligen Abschnitt 32 durch Umformen herzustellen. Weiterhin sind zwischen dem Lagerabschnitt 3 und dem Stegabschnitt 1 bzw. dem Backensteg 5 jeweils dem Lagerabschnitt 3 zugeordnete Biegeabschnitte 35 vorgesehen. Die Biegeabschnitte 35 sind im Wesentlichen gerundet gekrümmt. Dabei weisen die Biegeabschnitte 35 eine Krümmung von circa 90° auf. An ihren jeweiligen Enden sind die Biegeabschnitte 35 jeweils tangential zum ebenen Abschnitt 34 des Lagerabschnitts und zum Stegabschnitt 1 bzw. zum Backensteg 5 ausgebildet.

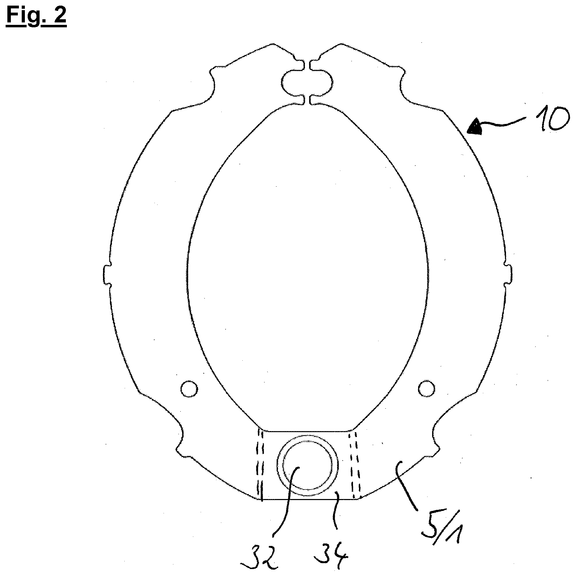

Fig. 2 zeigt ein Stanzteil 10, welches in einem erfindungsgemäßen Verfahren zu der in Fig. 1 gezeigten, bevorzugten Ausführungsform des Backenelements verarbeiten werden kann. Das Stanzteil 10 weist dabei bereits Bereiche auf, welche zur Herstellung eines balligen Abschnitts 32 und zur Herstellung von Stegabschnitten 1 bzw. Backenstegen 5 ausgebildet sind. Weiterhin weist das Stanzteil 10 bereits einen ebenen Abschnitt 34 auf, innerhalb dessen der ballige Abschnitt 32 bei dem bevorzugten Umformverfahren wie Gesenkschmieden oder Tiefziehen ausgebildet werden kann. Der Vorteil der Verwendung eines Stanzteils 10 liegt darin, dass dieses Teil einfach herzustellen ist und bereits sämtliche Konturen, die zur Festlegung weiterer Elemente an den aus dem Stanzteil 10 herzustellenden Backenelement dienen, enthält.

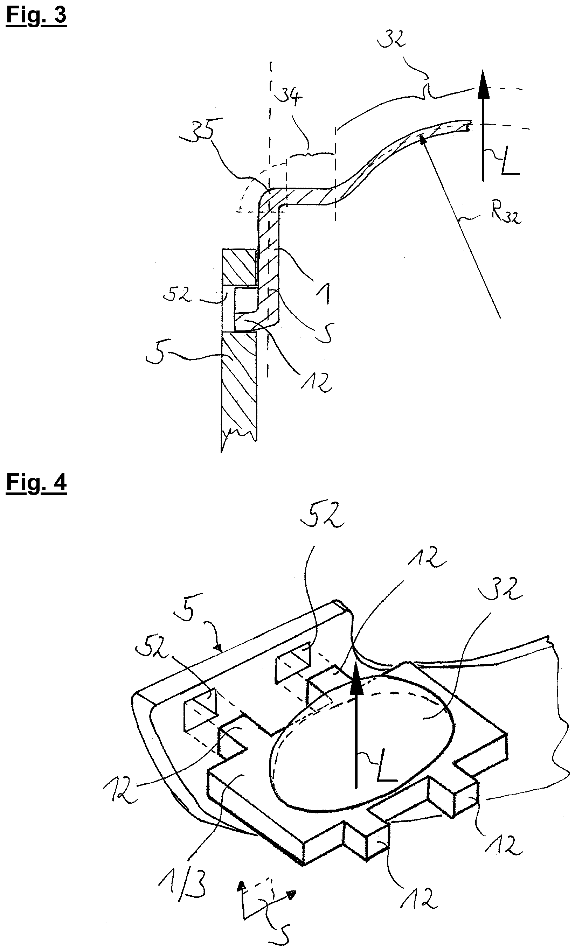

Fig. 3 zeigt eine alternative Ausführungsform eines erfindungsgemäßen Backenelements in Schnittansicht. Dabei sind der Stegabschnitt 1 und der Backensteg 5 nicht einstückig miteinander ausgebildet. Stattdessen weist der Stegabschnitt 1 einen stegseitigen Eingriffsabschnitt 12 auf und der Backensteg 5 einen backenseitigen Eingriffsabschnitt 52. Beide Eingriffsabschnitte 12, 52 sind dafür ausgelegt, einen Formschluss zwischen dem Stegabschnitt 1 und dem Backensteg 5 zu bilden. Weiterhin bevorzugt ist, benachbart zum Stegabschnitt 1 und einstückig mit diesem ausgeführt, ein Lagerabschnitt 3 vorgesehen, wobei der Lagerabschnitt 3 einen Biegeabschnitt 35, einen ebenen Abschnitt 34 und einen balligen Abschnitt 32 aufweist. Der ballige Abschnitt 32 ist vorzugsweise mit einem Rundungsradius R₃₂ gekrümmt ausgebildet. Es versteht sich, dass dieser Rundungsradius sowohl in der in Fig. 3 gezeigten Schnittebene messbar ist, als auch vorzugsweise in einer Schnittansicht parallel zu der in Fig. 3 gezeigten Stegebene S. Weiterhin ist offenbart, dass der Biegeabschnitt 35 vorzugsweise einen Winkel von circa 90° beschreibt. In diesem Zusammenhang sind Winkelabweichungen von -5° bis +5° im Rahmen der Erfindung vorgesehen.

Fig. 4 zeigt eine weitere bevorzugte Ausführungsform eines erfindungsgemäßen Backenelements, wobei der Stegabschnitt 1 und der Lagerabschnitt 3 als einstückiges Bauteil ausgebildet sind, wobei am Stegabschnitt 1 vorzugsweise vier stegseitige Eingriffsabschnitte 12 vorgesehen sind, die mit entsprechend korrespondierenden backenseitigen Eingriffsabschnitten 52 am Backensteg 5 in Eingriff bringbar sind, um den Stegabschnitt 1 und den Lagerabschnitt 3 am Backensteg 5 formschlüssig festzulegen. In der Fig. nicht gezeigt ist lediglich, dass auf der gegenüberliegenden Seite des gezeigten Backensteges 5 ein weiterer Backensteg 5 vorgesehen ist, um mit den beiden gegenüberliegenden stegseitigen Eingriffsabschnitten 12 in Eingriff zu gelangen. Der Vorteil der in Fig. 4 gezeigten Ausführungsform ist, dass im Wesentlichen ebene Bauteile, bzw. Stanzteile zur Herstellung einer Bremsbacke Anwendung finden können, wobei lediglich der Lagerbereich 3 zur Ausbildung des balligen Abschnitts 32 umgeformt werden muss, während sämtliche andere Bauteile bereits in einem Stanzvorgang hergestellt und in der richtigen Form bereitgestellt werden können. Insbesondere ist keine Umformung an den Backenstegen 5 notwendig, wodurch sich der Fertigungsaufwand reduziert. Lediglich die backenseitigen Eingriffsabschnitte 52 müssen während des Herstellungsverfahrens aus dem Material des Backensteges 5 ausgeschnitten werden. Vorzugsweise ist der ballige Abschnitt nicht kreisförmig gerundet ausgeführt, sondern weist im Wesentlichen die Grundfläche einer Ellipse auf. Auf diese Weise können verschiedene Verschwenkverhalten der Bremsbacke bzw. des Backenelements an einem Bremsträger in verschiedenen Bremsrichtungen erzeugt werden. Auf diese Weise kann die Abnutzung des balligen Abschnitts 32 positiv beeinflusst werden, da in Richtung der häufig auftretenden Schwenkbewegungen ein größerer Krümmungsradius vorgesehen werden kann, um dort die Gleitreibung auf eine größere Reibungsfläche zu verteilen als bei den quer zu diesen Schwenkrichtung verlaufenden Schwenkrichtungen. Auch in Fig. 3 und Fig. 4 ist die zu Fig. 1 erläuterte Lagerrichtung L gezeigt.

**Bezugszeichenliste:**

| | |
|---|---|
| 1 | - Stegabschnitt |
| 3 | - Lagerabschnitt |
| 5 | - Backensteg |
| 10 | - Stanzteil |
| 12 | - stegseitiger Eingriffsabschnitt |
| 32 | - balliger Abschnitt |
| 34 | - ebener Abschnitt |
| 35 | - Biegeabschnitt |
| 52 | - Eingriffsabschnitt |
| L | - Lagerrichtung |
| S | - Stegebene |

## Patentansprüche

1. Backenelement, insbesondere zum Einsatz in einer Trommelbremse, umfassend einen Stegabschnitt (1) und einen Lagerabschnitt (3),
wobei der Lagerabschnitt (3) einen balligen Abschnitt (32) aufweist,
wobei der Stegabschnitt (1) einen stegseitigen Eingriffsabschnitt (12) zum formschlüssigen Eingriff mit einem Backensteg (5) aufweist, oder einstückig mit einem Backensteg (5) ausgeführt ist,
**dadurch gekennzeichnet, dass** der Stegabschnitt (1) und der Lagerabschnitt (3) einstückig miteinander ausgebildet sind.

2. Backenelement nach Anspruch 1,
wobei die konvexe Seite des balligen Abschnitts (32) in eine Lagerrichtung (L) weist,
wobei sich der Stegabschnitt (1) entgegengesetzt zur Lagerrichtung (L) erstreckt.

3. Backenelement nach einem der Ansprüche 1 oder 2,
wobei der Lagerabschnitt (3) und der Stegabschnitt (1) gemeinsam als Blechteil ausgeführt sind.

4. Backenelement nach Anspruch 3,
wobei die Wandstärke des Blechteils im Wesentlichen konstant ist.

5. Backenelement nach einem der vorhergehenden Ansprüche,
wobei der Lagerabschnitt (3) und der Stegabschnitt (1) mittels Umformen hergestellt sind.

6. Backenelement nach einem der vorhergehenden Ansprüche,
wobei der Backensteg (5) seine größte Erstreckung längs einer Stegebene (S) aufweist,
wobei der Backensteg (5) mit dem Stegabschnitt (1) vorzugsweise formschlüssig und stoffschlüssig in Eingriff bringbar ist.

7. Backenelement nach Anspruch 6,
wobei der stegseitige Eingriffsabschnitt (12) ausgelegt ist, eine längs der Stegebene (S) wirkende Hinterschneidung mit einem backenseitigen Eingriffsabschnitt (52) des Backensteges (5) zu bilden.

8. Backenelement nach einem der vorhergehenden Ansprüche,
wobei der Stegabschnitt (1) zumindest in seinen unmittelbar an den Lagerabschnitt (3) grenzenden Bereichen eben und krümmungsfrei ausgebildet ist.

9. Backenelement nach einem der vorhergehenden Ansprüche,
wobei der Lagerabschnitt einen ebenen Abschnitt (34) aufweist,
wobei der ballige Abschnitt (32) unmittelbar an den ebenen Abschnitt (34) grenzt und von diesem zumindest bereichsweise umgeben ist.

10. Backenelement nach Anspruch 9,
wobei der ebene Abschnitt (34) und der Stegabschnitt (1) in einem Biegeabschnitt (35) aneinander grenzen,
wobei der Biegeabschnitt (35) eine Krümmung von ca. 90° aufweist.

11. Backenelement nach einem der vorhergehenden Ansprüche,
wobei der ballige Abschnitt (32) rotationssymmetrisch um die Lagerrichtung (L) ausgebildet ist.

12. Verfahren zur Herstellung einer Bremsbacke, umfassend die Schritte:
a) Bereitstellen eines Stanzteils (10) mit einem Lagerabschnitt (3),
b) Umformen des Lagerabschnitts (3) derart, dass ein balliger Abschnitt (32) gebildet ist,
c) Umformen des Stanzteiles (10) und erzeugen eines ersten Stegabschnitts (1) benachbart zum Lagerabschnitt (3),
wobei der erste Stegabschnitt (1) sich im Wesentlichen quer zum Lagerabschnitt (3) erstreckt.

13. Verfahren nach Anspruch 12,
wobei zum Umformen des Lagerabschnitts (3) Gesenkschmieden oder Tiefziehen zum Einsatz kommt.

14. Verfahren nach einem der Ansprüche 12 oder 13,
wobei zum Umformen des Stanzteils (10) zur Ausbildung des ersten Stegabschnitts (1) ein Tiefziehverfahren zum Einsatz kommt.

15. Verfahren nach einem der Ansprüche 12 bis 14,
wobei das Ausformen des Lagerabschnitts (3) und das Abwinkeln des Stegabschnitts (1) in einem Arbeitsgang erfolgen.

## Claims

1. A shoe element, particularly for use in a drum brake, comprising a web segment (1) and a support segment (3),
wherein the support segment (3) comprises a spherical segment (32), wherein the web segment (1) comprises a web-side engagement segment (12) for interlocking engagement with a shoe web (5), or is integrally formed with a shoe web (5),
**characterized in that** the web segment (1) and the support segment (3) are integrally formed with one another.

2. The shoe element as claimed in claim 1,
wherein the convex side of the spherical segment (32) points in a support direction (L),
wherein the web segment (1) extends in the opposite direction to the support direction (L).

3. The shoe element as claimed in one of claims 1 or 2,
wherein the support segment (3) and the web segment (1) are formed together as a sheet-metal part.

4. The shoe element as claimed in claim 3,
wherein the wall thickness of the sheet-metal part is substantially constant.

5. The shoe element as claimed in one of the preceding claims,
wherein the support segment (3) and the web segment (1) are produced by means of forming.

6. The shoe element as claimed in one of the preceding claims,
wherein the shoe web (5) has its greatest extent along a web plane (S), wherein the shoe web (5) can be brought into engagement with the web segment (1) preferably by positive interlock and by a cohesive material joint.

7. The shoe element as claimed in claim 6,
wherein the web-side engagement segment (12) is designed to form an undercut, acting along the web plane (S), with a shoe-side engagement segment (52) of the shoe web (5).

8. The shoe element as claimed in one of the preceding claims,
wherein the web segment (1), at least in its areas immediately adjoining the support segment (3), is plane and without any curvature.

9. The shoe element as claimed in one of the preceding claims,
wherein the support segment comprises a plane segment (34), wherein the spherical segment (32) directly adjoins the plane segment (34) and is at least in some areas surrounded thereby.

10. The shoe element as claimed in claim 9,
wherein the plane segment (34) and the web segment (1) adjoin one another in a bent segment (35),
wherein the bent segment (35) has a curvature of approximately 90°.

11. The shoe element as claimed in one of the preceding claims,
wherein the spherical segment (32) is formed so that it is rotationally symmetrical about the support direction (L).

12. A method for producing a brake shoe, comprising the steps:
a) provision of a stamped part (10) having a support segment (3),
b) forming of the support segment (3) in such a way that a spherical segment (32) is formed,
c) forming of the stamped part (10) and producing of a first web segment (1) adjacent to the support segment (3),
wherein the first web segment (1) extends substantially transversely to the support segment (3).

13. The method as claimed in claim 12,
wherein drop forging or deep drawing is used for forming the support segments (3).

14. The method as claimed in one of claims 12 or 13,
wherein a method of deep drawing is used for forming the stamped part in order to form the first web segment (1).

15. The method as claimed in one of claims 12 to 14,
wherein the shaping of the support segment and the bending of the web segment (1) are performed in one operation.

## Revendications

1. Élément formant mâchoire, destiné en particulier à l'utilisation dans un frein à tambour, comportant une portion d'âme (1) et une portion d'appui (3),
la portion d'appui (3) présentant une partie bombée (32),
la portion d'âme (1) présentant une partie d'engagement (12) côté âme pour l'engagement en coopération de forme avec une âme de mâchoire (5) ou étant réalisée d'un seul tenant avec une âme de mâchoire (5),
**caractérisé en ce que** la portion d'âme (1) et la portion d'appui (3) sont réalisées d'un seul tenant l'une avec l'autre.

2. Élément formant mâchoire selon la revendication 1,
dans lequel la face convexe de la partie bombée (32) est dirigée dans une direction d'appui (L), et
la portion d'âme (1) s'étend en sens opposé à la direction d'appui (L).

3. Élément formant mâchoire selon l'une des revendications 1 ou 2,
dans lequel la portion d'appui (3) et la portion d'âme (1) sont réalisées conjointement sous forme de pièce en tôle.

4. Élément formant mâchoire selon la revendication 3,
dans lequel l'épaisseur de paroi de la pièce en tôle est sensiblement constante.

5. Élément formant mâchoire selon l'une des revendications précédentes, dans lequel la portion d'appui (3) et la portion d'âme (1) sont réalisées par mise en forme.

6. Élément formant mâchoire selon l'une des revendications précédentes, dans lequel l'âme de mâchoire (5) présente sa plus grande extension le long d'un plan d'âme (S), et
l'âme de mâchoire (5) peut être amenée en engagement avec la portion d'âme (1) de préférence par coopération de forme et par coopération de matière.

7. Élément formant mâchoire selon la revendication 6,
dans lequel la partie d'engagement (12) côté âme est conçue pour former une contre-dépouille agissant le long du plan d'âme (S) avec une partie d'engagement (52) côté mâchoire de l'âme de mâchoire (5).

8. Élément formant mâchoire selon l'une des revendications précédentes, dans lequel la portion d'âme (1) est réalisée de façon plane et exempte de courbure dans ses zones adjacentes directement à la portion d'appui (3).

9. Élément formant mâchoire selon l'une des revendications précédentes, dans lequel la portion d'appui comprend une partie plane (34), et
la partie bombée (32) est adjacente directement à la partie plane (34) et est au moins localement entourée par celle-ci.

10. Élément formant mâchoire selon la revendication 9,
dans lequel la partie plane (34) et la portion d'âme (1) sont adjacentes l'une à l'autre dans une portion cintrée (35), et
la portion cintrée (35) présente une courbure d'environ 90°.

11. Élément formant mâchoire selon l'une des revendications précédentes, dans lequel la partie bombée (32) est réalisée à symétrie de révolution autour de la direction d'appui (L).

12. Procédé de réalisation d'une mâchoire de frein, comprenant les étapes consistant à :
a) fournir une pièce poinçonnée (10) munie d'une portion d'appui (3),
b) mettre en forme la portion d'appui (3) de manière à former une partie bombée (32),
c) mettre en forme la pièce poinçonnée (10) et réaliser une première portion d'âme (1) au voisinage de la portion d'appui (3),
la première portion d'âme (1) s'étendant sensiblement transversalement à la portion d'appui (3).

13. Procédé selon la revendication 12,
dans lequel la mise en forme de la portion d'appui (3) consiste en un estampage ou en un emboutissage.

14. Procédé selon l'une des revendications 12 ou 13,
dans lequel la mise en forme de la pièce poinçonnée (10) destinée à former la première portion d'âme (1) consiste en un emboutissage.

15. Procédé selon l'une des revendications 12 à 14,
dans lequel le formage de la portion d'appui (3) et le coudage de la portion d'âme (1) s'effectuent en une seule passe de travail.
